**Europäisches Patentamt**

(19) **European Patent Office**

**Office européen des brevets**

(11) Veröffentlichungsnummer: **0 103 266**
**B1**

(12) **EUROPÄISCHE PATENTSCHRIFT**

(45) Veröffentlichungstag der Patentschrift:
**14.01.87**

(21) Anmeldenummer: **83108806.7**

(22) Anmeldetag: **07.09.83**

(51) Int. Cl.⁴: **C 08 G 59/50**

(54) Härtungsmittel für Epoxidharze und Verfahren zum Härten von Epoxidharzen.

(30) Priorität: **10.09.82 DE 3233565**

(43) Veröffentlichungstag der Anmeldung:
**21.03.84 Patentblatt 84/12**

(45) Bekanntmachung des Hinweises auf die Patenterteilung:
**14.01.87 Patentblatt 87/3**

(84) Benannte Vertragsstaaten:
**AT BE CH DE GB LI NL**

(56) Entgegenhaltungen:
**DE-A-1 595 633**
**DE-A-1 770 941**
**DE-A-2 131 929**
**GB-A-874 754**
**US-A-4 316 003**

(73) Patentinhaber: **HOECHST AKTIENGESELLSCHAFT,
Postfach 80 03 20, D-6230 Frankfurt am Main 80
(DE)**

(72) Erfinder: **Marten, Manfred, Schneeheide 36, D-2104
Hamburg 92 (DE)**
Erfinder: **Becker, Wilhelm, Dr., Öjendorfer Höhe
37c, D-2000 Hamburg 74 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## 0 103 266

**Beschreibung**

Die Erfindung betrifft Härtungsmittel für Epoxidharze und en Verfahren zum Härten von Epoxidharzen mit diesen Härtungsmitteln.

Es ist bekannt, Epoxidharze mit Polyaminen zur Herstellung unschmelzbarer, und unlöslicher Formkörper und Überzüge umzusetzen; jedoch war es bisher nicht möglich, durch Umsetzen von niedermolekularen, gießbaren Polyepoxidverbindungen mit äquivalenten Mengen an araliphatischen bzw. cycloaliphatischen Polyaminen oder ihren Modifizierungsprodukten bei Raumtemperatur klare, wasserfeste, elastische und chemikalienbeständige Härtungsprodukte zu erhalten.

Araliphatische bzw. cycloaliphatische Polyamine oder ihre Modifizierungsprodukte ergeben in Kombination mit niedermolekularen, flüssigen Polyepoxiden Reaktionsgemische mit kurzer Gebrauchs- oder Topfzeit, aber mit einer recht langsamen Aushärtung der in dünner Schicht aufgetragenen Mischung. Die resultierenden Überzüge haben zwar eine gute Chemikalienbeständigkeit, sind aber trüb, verlaufen sehr schlecht und haben nur eine geringe Wasserfestigkeit. Ursache für diese Erscheinung ist die Absorption von $CO_2$ und Wasser aus der Luft, wodurch ein Teil der Aminogruppen in Carbaminate bzw. Carbonate umgewandelt und der Reaktion mit Epoxidgruppen entzogen wird.

Zur Beseitigung dieser Nachteile wurde in der DE-OS 17 70 832 vorgeschlagen, Formkörper und Überzüge durch Umsetzen von Polyepoxidverbindungen mit z.B. cycloaliphatischen Polyaminoverbindungen mit mindestens zwei primären und/oder sekundären Aminogruppen in Gegenwart von Alkylphenolen, gegebenenfalls in Gegenwart üblicher Zusatzstoffe, auch völlig ohne Mitverwendung von Lösungsmitteln und auch bei Temperaturen unter 20°C herzustellen, wobei Polyepoxidverbindungen, die bei der Verarbeitungstemperatur flüssig sind mit einem flüssigen Gemisch von Polyaminoverbindungen und flüssigen Alkylphenolen umgesetzt werden, in dem das molare Verhältnis der Summe von primären und/oder sekundären Aminogruppen zu den Hydroxygruppen des Alkylphenols 0,9 bis 1,1:1 beträgt. Diese Zumischung von freien Alkylphenolen führt jedoch zu einer Beeinträchtigung der Chemikalienbeständigkeit der aus den araliphatischen bzw. cycloaliphatischen Polyaminem und Epoxidharzen hergestellten Formkörper und Überzüge.

In der DE-OS 21 64 099 wird zur Beseitigung dieser Nachteile ein Verfahren zur Herstellung von Polyaddukten auf der Basis von 1,2-Epoxidverbindungen mit mehr als einer Epoxidgruppe im Molekül und Aminen nach bekannten Methoden vorgeschlagen, bei dem man als Amine Produkte verwendet, die durch Cyanalkylierung von Aminen der allgemeinen Formel $H(NH-R-)_mNH-R'-NH_2$ erhalten worden sind, worin m 0-10 und R und R' gleiche oder verschiedene, unverzweigte oder verzweigte Alkylenreste mit 2 bis 40, vorzugsweise 2 bis 20 C-Atomen sind, die gegebenenfalls eine oder mehrere Carbonsäureamidgruppierungen in der Alkylenkette enthalten, und wobei die cyanalkylierten Amine mindestens zwei an basische Stickstoffatome gebundene H-Atome enthalten.

Weiterhin können nach der DE-OS 24 60 305 Arylalkylaminacrylnitriladdukte, wie cyanäthyliertes m- oder p-Xylylendiamin, mit flüssigen Epoxidharzen zur Herstellung transparenter Formstoffe mit glänzender Oberfläche dienen. Cyanäthylierte Bis-(aminoalkyl)-cyclohexane werden in der US-PS 3 478 081 als Härter für Epoxidharze genannt, welche zu Formstoffen mit guter Flexibilität und hoher Wärmebeständigkeit führen sollen.

Die Verwendung von Cyanalkylierungsprodukten von araliphatischen bzw. cycloaliphatischen Polyaminen führt ebenfalls zu einer Beeinträchtigung der Chemikalienbeständigkeit der Formkörper und Überzüge. Nachteilig ist bei den Cyanalkylierungsprodukten weiterhin die oft unerwünscht lange Verarbeitungszeit (Topfzeit).

Schließlich wurde schon die Herstellung von Epoxid-Form- oder -Überzugsmassen unter Verwendung von solchen Monoaminen vorgeschlagen (DE-B- 1 138 539), die eine an einen cycloaliphatischen Rest gebundene Aminogruppe enthalten und deren cycloaliphatischer Rest direkt oder über Brückenatome mit einem weiteren cycloaliphatischen Rest verbunden ist, gegebenenfalls im Gemisch mit mehrwertigen aliphatischen oder cycloaliphatischen Aminen wie 4,4'-Diaminodicyclohexyl, 4,4'-Diaminodicyclohexylmethan und 1,2- bzw. 1,4-Diaminocyclohexan. Die Mindestmenge der Monoamine beträgt 40 %.

Es wurde nun gefunden, daß man diese Nachteile vermeidet und dennoch chemikalienbeständige Formkörper (einschließlich flächenförmigen, wie Überzügen) unter Verwendung von Härtungsmitteln aus

a) bei Raumtemperatur flüssigen araliphatischen oder cycloaliphatischen Diaminen mit 4 Aminowasserstoffatomen bzw. deren flüssigen Derivaten mit mindestens 3, vorzugsweise bis 5, Aminowasserstoffatomen,

b) gegebenenfalls üblichen Modifizierungsmitteln dafür und

c) gegebenenfalls üblichen Zusatzstoffen erhält, wenn man

d) 0,1 bis 10 Gew.-%, bevorzugt 0,5 bis 5 Gew.-%, bezogen auf die Summe der Komponenten a) und d), primäre aliphatische Monoamine, deren Alkylreste 5 bis 18, bevorzugt 6 bis 10 Kohlenstoffatome haben,

mitverwendet. Wesentliches Merkmal der Erfindung ist es, daß die Komponenten a), b) und d) miteinander verträglich sind.

Diamine gemäß a) sind vorzugsweise m-Xylylendiamin bzw. dessen flüssige Gemische mit p-Xylylendiamin, ferner z.B. 1,3- bzw. 1,4-Bis(aminomethyl)cyclohexan bzw. Gemische dieser Diamine. Geeignete flüssige Derivate sind z.B. Mannich-Basen, die bevorzugt sind und durch Kondensation der Amine mit Aldehyden wie Formaldehyd oder Acetaldehyd und Phenolen wie Phenol, den Kresolen oder p-tert.-Butylphenol erhalten werden. Sie können aber auch mit den bereits genannten flüssigen Epoxidharzen zum Teil zu noch flüssigen und damit verarbeitbaren Amin-Addukten umgesetzt worden sein.

Geeignete Monoamine d), die im allgemeinen flüssig sind, sind z.B. die geradkettigen oder verzweigten Hexyl-, Heptyl-, Oktyl-, Nonyl-, Decyl- oder Dodecylamine, bevorzugt n-Oktylamin oder iso-Nonylamin, sämtlich einzeln oder im Gemisch.

Man erhält nach dem erfindungsgemäßen Verfahren völlig klare Gießmassen und Formkörper (einschließlich Überzügen) mit einer guten Chemikalienbeständigkeit, vor allem gegen Salze, Säuren und Alkalien, und einer guten Alterungsbeständigkeit, einer hohen Wasserfestigkeit sowie einer glatten, kraterfreien Oberfläche. Eine Mitverwendung von Lösungsmitteln, Verdünnungsmitteln und/oder Weichmachern in Mengen von zusammen weniger als 30 Gew.-% ist möglich. Eine Verarbeitung mit geeigneten Zweikomponenten-Spritzpistolen ist ebenfalls möglich und hat den Vorteil, daß sich die begrenzte Gebrauchszeit der Reaktionsgemische überspielen läßt. Da die Umsetzung der erfindungsgemäßen Härtungsmittel mit den Epoxydharzen auch bei Temperaturen von 0 bis 20°C rasch erfolgt, erübrigt sich des Erhitzen der Reaktionsmischung.

Als Epoxidharze sind alle bei Raumtemperatur flüssigen Produkte geeignet, die mehr als eine Epoxidgruppe im Molekül enthalten, oder Lösungen von festen Epoxidharzen. Es sind dies vor allem niedrigmolekulare flüssige Polyglycidyläther, die in üblicher Weise durch Umsetzung von mehrwertigen Phenolen, insbesondere Bisphenolen, oder mehrwertigen Alkoholen, wie Glycerin, Pentaerythrit oder Butandiol-1,4 mit Epihalogenhydrin wie Epibromhydrin, vorzugsweise aber Epichlorhydrin erhalten werden können. Geeignet sind auch Polyglycidylester sowie flüssige Polyepoxide, die aus niedermolekularen ungesättigten Kohlenwasserstoffen und Hydroperoxiden erhältlich sind. Beispiele für geeignete Polyepoxidverbindungen, die bevorzugt ein Molekulargewicht unter 600 aufweisen, sind die Diglycidyläther des 2,2-Bis-(p-hydroxyphenyl)-propans und die Polyglycidyläther von Pentaerythrit, Glycerin, Propylenglykol-1,2 oder Butandiol-1,4. Jedoch können auch feste Epoxidharze verwendet werden, wenn sie mit Lösungsmitteln in flüssige Form gebracht werden. Die Polyepoxide können allein oder im Gemisch miteinander oder zusammen mit zugesetzten untergeordneten Mengen an Monoepoxidverbindungen angewendet werden, deren Menge z.B. bis zu 5 Gew.-% beträgt. Als solche eignen sich epoxydierte einfach ungesättigte Kohlenwasserstoffe mit mindestens 4 C-Atomen, z.B. Butylen-, Cyclohexen- und Styroloxid, halogenhaltige Epoxide, wie Epichlorhydrin, Glycidyläther einwertiger Alkohole, z.B. des Methyl-, Äthyl-, Butyl-, 2-Äthylhexyl-, Dodecylalkohols, Olycidyläther einwertiger Phenole, z.B. des Phenols, Kresols sowie andere in o- oder p-Stellung substituierte Phenole, Glycidylester ungesättigter Carbonsäuren, epoxydierte Ester von olefinisch ungesättigten Alkoholen bzw. olefinisch ungesättigten Carbonsäuren sowie die Acetale des Glycidaldehyds.

Als übliche Modifizierungsmittel b) kommen z.B. Flexibilisatoren und insbesondere Lösungsmittel, in denen sowohl die Amine a) und d) als auch die Epoxidharze löslich sind, in Frage. Geeignete Lösungsmittel sind z.B. aromatische Kohlenwasserstoffe wie Toluol und die Xylole, allein oder im Gemisch mit Alkoholen wie n- und i-Butanol und den Amylalkoholen, ferner Ketone wie Methyläthylketon und Methylisobutylketon, ferner Benzylalkohol, die Mono- oder Diäther des Äthylen- oder 1,2-Propylenglykols mit Methanol, Äthanol, Propanol und den verschiedenen Butanolen, jeweils einzeln oder im Gemisch. Als Flexibilisatoren seien z.B. genannt Phthalsäureester von einwertigen Alkoholen, z.B. n-Butanol, Amylalkohol, 2-Äthylhexanol, Nonanol, Benzylalkohol einzeln oder im Gemisch, γ-Butyrolacton, α-Valerolacton, ε,-Caprolacton, Furfurylalkohol, niedriger- und höher-molekulare mehrwertige Alkohole wie Glyzerin, Trimethyloläthan oder -propan, Äthylenglykol sowie oxäthylierte oder oxpropylierte mehrwertige Alkohole.

Die Härtungsmittel können zusätzlich weitere übliche Zusatzstoffe, wie inerte Füllstoffe, Pigmente, Farbstoffe, lösliche Farbstoffe enthalten. Als Füllstoffe eignen sich z.B. Siliciumoxyd, hydratisiertes Aluminiumoxyd, Titandioxyd, Glasfasern, Holzmehl, Glimmer, Graphit, Calciumsilikat und/oder Sand sowie die üblichen Pigmente, beispielsweise mit Korngrößen von 5 bis 500μm.

Schließlich können den Härtergemischen andere übliche Härter für die Umsetzung mit den Polyepoxidverbindungen in Mengen von bis 10 Gew.-%, bezogen auf die Gesamtmenge der Härter, zugemischt werden.

In den folgenden Beispielen und der Tabelle bedeutet HAV Wasserstoffäquivalentgewicht, TZ Topfzeit und RT Raumtemperatur.

## Vorprodukte für die Beispiele

Es wurden folgende Kondensate hergestellt:

A) 135 g m-Xylylendiamin (1 Mol) wurden in einem Dreihalskolben mit Rührer, Thermometer und Abscheider unter Rühren mit 94 g Phenol (1 Mol) versetzt und auf 70°C erwärmt. Dann ließ man bei 70°C 58 g 36,5%iger Formaldehyd (0,7 Mol) innerhalb von ca. 4 Stunden zulaufen, danach wurde das Wasser bei max. 70°C unter vermindertem Druck abdestilliert und der Ansatz bei 40-60 mbar innerhalb 1 Stunde auf 90°C geheizt. Das Reaktionsprodukt wurde noch 1 Stunde unter diesen Bedingungen gehalten, abgekühlt und belüftet. Das erhaltene Mannich-Basen-Kondensat hatte eine Viskosität von 2500mPa.s (25°G) (HAV 70).

B) 150 g m-Xylylendiamin (1,3 Mol) wurden in der unter A) genannten Vorrichtung unter Rühren mit 94 g Phenol (1 Mol) versetzt und auf 70°C erwärmt. Dann ließ man bei 70°C 107 g Formaldehyd (36,5 %ig) (1,3 Mol) innerhalb von 3 Stunden zulaufen. Nach einer Haltezeit von 30 Minuten bei 70°C wurde verminderter Druck angelegt und das Wasser abdestilliert. Das Reaktionsprodukt wurde bei 40-60 mbar 30 Minuten bei 105°C gehalten, abgekühlt und belüftet. Das erhaltene Mannich-Basen-Kondensat hatte in 90%iger Äthanollösung eine Viskosität von 9.900 mPa.s (25° C); (HAV 83,7).

### I: Beispiele 1 - 5 (Härtungsmittel)

Es wurden jeweils unter Stickstoff bei 30°C die unten angegebenen Mengen an Polyaminen und Monoaminen verrührt, bis eine vollständige Vermischung erfolgt war:

1. 97 g m-Xylylendiamin und 3 g Octylamin; HAV der Mischung 34,5.
2. 97 g m-Xylylendiamin und 3 g Isononylamin (Gemisch isomerer Nonylamine mit ca. 90 % 3,5,5-Trimethylhexylamin); HAV der Mischung 34,5.
3a) 97,5 g des Mannich-Basen-Kondensats A und 2,5 g Octylamin; HAV der Mischung 69,8.
3b) 97,5 g des Mannich-Basen-Kondensats A und 2,5 g Isononylamin; HAV der Mischung 70.
3c) 97,5 g des Mannich-Basen-Kondensats A und 2,5 g Decylamin; HAV der Mischung 70,2.
4a) 75 g des Mannich-Basen-Kondensats B, 22,5 g Benzylalkohol und 2,5 g Octylamin; HAV der Mischung 107.
4b) 75 g des Mannich-Basen-Kondensats B, 22,5 g Benzylalkohol und 2,5 g Isononylamin; HAV der Mischung 107,4.
5. 97 g 1,4-Bis (aminomethyl)cyclohexan und 3 g Octylamin; HAV der Mischung 36.

### Vergleichshärter

V 1: m-Xylylendiamin (Wasserstoffäquivalent 34)
V 2: Mannich-Basen-Kondensat A
V 3; 75 g des Mannich-Basen-Kondensats B und 25 g Benzylalkohol wurden unter Stickstoff bei 30° C gerührt, bis eine vollständige Vermischung erfolgt war; (HAV der Mischung 111).
V 4: 1,4-Bis(aminomethyl)cyclohexan (HAV 35,5).

### II: Beispiele 6 - 10 (Überzüge)

Mit den unter I genannten Produkten und Vergleichsprodukten und einem Epoxidharz wurden in folgender Weise Beschichtungen hergestellt, die anwendungstechnisch beurteilt wurden.

100 g eines niedermolekularen Diphenylolpropan-Diglycidyläthers mit einer Viskosität von ca. 10.000 mPa.s und einem Epoxidäquivalentgewicht von 183 wurden mit der dem Wasserstoffäquivalent entsprechenden Menge des jeweiligen Härters gemischt und ein Film von 200 µm Dicke auf jeweils 2 Glasplatten aufgezogen. Eine Platte wurde 24 Stunden bei 23°C und 40-50 % relativer Luftfeuchte gelagert, die andere Platte wurde 24 Stunden bei 5°C aufbewahrt. Die Filme wurden auf Klebrigkeit, Trübung und Härte untersucht. Danach wurden die beschichteten Platten 30 Minuten in ein Wasserbad gestellt und nach dem Abtrocknen die Veränderung (Trübung) des Films beurteilt.

Wie aus der Tabelle ersichtlich ist, weisen die mit den erfindungsgemäßen Härtungsmitteln hergestellten Beschichtungen eine einwandfreie Oberflächenbeschaffenheit auf, während bei den Vergleichsbeispielen eine mehr oder weniger starke Trübung zu beobachten ist. Durch diese Trübung sind weitere Nachteile bedingt, die durch die erfindungsgemäßen Hartungsmittel beseitigt werden und ihren technischen Fortschritt beweisen. Einmal wird durch die, die Trübung hervorrufende, Carbonat- bzw. Carbaminatbildung die Zwischenschichthaftung einer weiteren, darauf aufgetragenen Schicht erheblich gestört. Zum anderen ist durch die Carbonat- bzw. Carbaminatbildung die Vernetzungsdichte im gehärteten Film herabgesetzt. Es bieten sich Angriffspunkte für Chemikalien wie verdünnte organische Säuren; die Chemikalienbeständigkeit wird dadurch herabgesetzt.

**Tabelle**

**Prüfung der Beschichtungen**

| Beispiel | V 6 | 6 | 7 | V 7 | 8 a | 8 b | 8 c |
|---|---|---|---|---|---|---|---|
| Härter gemäß | Beispiel V1 | Beispiel 1 | Beispiel 2 | Beispeil V2 | Beispiel 3a) | Beispiel 3b) | Beispiel 3c) |
| HAV — Wert | 34 | 34,5 | 34,5 | 70 | 69,8 | 70 | 70,2 |
| TZ in Min. | 116 | 116 | 111 | 16 | 16 | 16 | 16 |
| Oberfläche 24 h RT | klebfrei trübe | klebfrei | klebfrei | leicht klebrig | klebfrei | klebfrei | klebfrei |
| Oberfläche 24 h 5°C | klebfrei trübe | klebfrei (sehr leicht trübe, abwischbar) | klebfrei (sehr leicht trübe, abwischbar) | klebrig | klebrei | klebfrei | klebfrei |
| Film n. 24 h bei RT | hart spröde | hart spröde | hart spröde | hart elastisch | hart elastisch | hart elastisch | hart elastisch |
| Film n. 24 h bei 5°C | weich spröde | weich spröde | weich spröde | weich spröde | weich spröde | weich spröde | weich spröde |
| Film n. 24 h bei RT im Wasserbad | stark trübe | unverändert | unverändert | trübe | unverändert | unverändert | unverändert |
| Film n. 24 h bei 5°C im Wasserbad | stark trübe | unverändert (d.h. keine zusätzliche Trübung) | unverändert (d.h. keine zusätzliche Trübung) | trübe | unverändert | unverändert | unverändert |

| Beispiel | V 8 | 9 a | 9 b | V 9 | 10 |
|---|---|---|---|---|---|
| Härter gemäß | Beispiel V 3 | Beispiel 4 a) | Beispiel 4 b) | Beispiel V 4 | Beispiel 5 |
| HAV — Wert | 111 | 107 | 107,4 | 34,5 | 36 |
| TZ in Min. | 25 | 25 | 25 | 60 | 60 |
| Oberfläche 24 h RT | leicht klebrig | klebfrei | klebfrei | klebfrei trübe | klebfrei |
| Oberfläche 24 h 5°C | klebrig | klebfrei | klebfrei | klebfrei trübe | klebfrei (sehr leicht trübe) |
| Film nach 24 h bei RT | hart elastisch | hart elastisch | hart elastisch | hart spröde | hart spröde |
| Film nach 24 h bei 5°C | weich leicht spröde | weich leicht spröde | weich leicht spröde | weich spröde | weich spröde |
| Film nach 24 h bei RT im Wasserbad | leicht trübe | unverändert | unverändert | stark trübe | unverändert |
| Film nach 24 h bei 5°C im Wasserbad | trübe | unverändert | unverändert | stark trübe | unverändert (d.h. keine zusätzl. Trübung) |

**Patentansprüche** für die Vertragsstaaten:

BE, CH, DE, GB, LI, NL

1. Härtungsmittel für Epoxidharze auf der Grundlage von
a) bei Raumtemperatur flüssigen araliphatischen oder cycloaliphatischen Diaminen mit 4 Aminowasserstoffatomen bzw. deren flüßigen Derivaten mit mindestens 3 Aminowasserstoffatomen,
b) gegebenenfalls üblichen Modifizierungsmitteln für die Polyamine gemäß a) und
c) gegebenenfalls üblichen Zusatzstoffen, dadurch gekennzeichnet, daß das Härtungsmittel
d) 0,1 bis 10 Gew.-% primäre aliphatische Monoamine, deren Alkylreste 5-18 Kohlenstoffatome haben, enthält, wobei die Prozentangabe auf die Summe der Komponenten a) und d) bezogen ist.

2. Verfahren zum Härten von Epoxidharzen mit Härtungsmitteln auf der Basis von
a) bei Raumtemperatur flüßigen araliphatischen oder cycloaliphatischen Diaminen mit 4 Aminowasserstoffatomen bzw. deren flüigen Derivaten mit mindestens 3 Aminowasserstoffatomen,
b) gegebenenfalls üblichen Modifizierungsmitteln für die Polyamine gemäß a) und
c) gegebenenfalls üblichen Zusatzstoffen, dadurch gekennzeichnet, daß das Härtungsmittel
d) 0,1 bis 10 Gew.-% primäre aliphatische Monoamine, deren Alkylreste 5-18 Kohlenstoffatome haben, enthält, wobei die Prozentangabe auf die Summe der Komponenten a) und d) bezogen ist.

3. Ausführungsform gemäß Anspruch 1 oder 2, dadurch gekennzeichnet, daß die Monoamine d) in einer Menge von 0,5 bis 5 Gew.-% zugegen sind.

4. Ausführungsform gemäß einem oder mehreren der Ansprüche 1 bis 3, dadurch gekennzeichnet, daß das aliphatische Monoamin 6 bis 10 C-Atome hat.

5. Ausführungsform gemäß einem oder mehreren der Ansprüche 1 bis 4, dadurch gekennzeichnet, daß das Diamin a) m-Xylylendiamin ist.

6. Ausführungsform nach einem oder mehreren der Ansprüche 1 bis 5, dadurch gekennzeichnet, daß als Derivat a) eine Mannich-Base aus dem Diamin und Aldehyden und Phenolen verwendet wird.

7. Ausführungsform nach einem oder mehreren der Ansprüche 1 bis 6, dadurch gekennzeichnet, daß die Epoxidharze flüssig sind.

8. Ausführungsform nach einem oder mehreren der Ansprüche 1 -7, dadurch gekennzeichnet, daß die Epoxidharze ein Molekulargewicht unter 600 haben.


**Patentansprüche** für den Vertragsstaat: AT

1. Verfahren zum Härten von Epoxidharzen mit Härtungsmitteln auf der Basis von
a) bei Raumtemperatur flüssigen araliphatischen oder cycloaliphatischen Diaminen mit 4 Aminowasserstoffatomen bzw. deren flüssigen Derivaten mit mindestens 3 Aminowasserstoffatomen,
b) gegebenenfalls üblichen Modifizierungsmitteln für die Polyamine gemäß a) und
c) gegebenenfalls üblichen Zusatzstoffen, dadurch gekennzeichnet, daß das Härtungsmittel
d) 0,1 bis 10 Gew.-% primäre aliphatische Monoamine, deren Alkylreste 5 - 18 Kohlenstoffatome haben, enthält, wobei die Prozentangabe auf die Summe der Komponenten a) und d) bezogen ist.

2. Verfahren gemäß Anspruch 1, dadurch gekennzeichnet, daß die Monoamine d) in einer Menge von 0,5 bis 5 Gew.-% zugegen sind.

3. Verfahren gemäß Anspruch 1 oder 2, dadurch gekennzeichnet, daß das aliphatische Monoamin 6 bis 10 C-Atome hat.

4. Verfahren gemäß einem oder mehreren der Ansprüche 1 bis 3, dadurch gekennzeichnet, daß das Diamin a) m-Xylylendiamin ist.

5. Verfahren nach einem oder mehreren der Ansprüche 1 bis 4, dadurch gekennzeichnet, daß als Derivat a) eine Mannich-Base aus dem Diamin und Aldehyden und Phenolen verwendet wird.

6. Verfahren nach einem oder mehreren der Ansprüche 1 bis 5, dadurch gekennzeichnet, daß die Epoxidharze flüssig sind.

7. Verfahren nach einem oder mehreren der Ansprüche 1 bis 6, dadurch gekennzeichnet, daß die Epoxidharze ein Molekulargewicht unter 600 haben.


**Claims** for the contracting states: BE, CH, DE, GB, LI, NL

1. Hardener for epoxy resins based on
a) araliphatic or cycloaliphatic diamines with 4 amino hydrogen atoms, liquid at ambient temperature, or liquid derivatives thereof with at least 3 amino hydrogen atoms,
b) optionally conventional modifiers for the polyamines in a) and
c) optionally conventional additives, characterized in that the hardener contains

d) 0.1 to 10 % by weight of primary aliphatic monoamines the alkyl groups of which have from 5 to 18 carbon atoms, the percentages being based on the sum of components a) and d).

2. Process for hardening epoxy resins with hardeners based on

a) araliphatic or cycloaliphatic diamines with 4 amino hydrogen atoms, liquid at ambient temperature, or liquid derivatives thereof with at least 3 amino hydrogen atoms,

b) optionally conventional modifiers for the polyamines in a) and

c) optionally conventional additives. characterized in that the hardener contains

d) 0.1 to 10 % by weight of primary aliphatic monoamines the alkyl groups of which have from 5 to 18 carbon atoms, the percentages being based on the sum of components a) and d).

3. Embodiment as claimed in claim 1 or 2, characterized in that the monoamines d) are present in an amount of from 0.5 to 5 % by weight.

4. Embodiment as claimed in one or more of claims 1 to 3, characterized in that the aliphatic monoamine has 6 to 10 carbon atoms.

5. Embodiment as claimed in one or more of claims 1 to 4, characterized in that the diamine a) is m-xylylenediamine.

6. Embodiment as claimed in one or more of claims 1 to 5, characterized in that as derivative a Mannich base is used consisting of the diamine and aldehydes and phenoles.

7. Embodiment as claimed in one or more of claims 1 to 6, characterized in that the epoxy resins are liquid.

8. Embodiment as claimed in one or more of claims 1 to 7, characterized in that the epoxy resins have a molecular weight of less than 600.


**Claims** for the contracting state: AT

1. Process for hardening epoxy resins with hardeners based on

a) araliphatic or cycloaliphatic diamines with 4 amino hydrogen atoms, liquid at ambient temperature, or liquid derivatives thereof with at least 3 amino hydrogen atoms,

b) optionally conventional modifiers for the polyamines in a) and

c) optionally conventional additives, characterized in that the hardener contains

d) 0.1 to 10 % by weight of primary aliphatic monoamines the alkyl groups of which have from 5 to 18 carbon atoms, the percentages being based on the sum of components a) and d).

2. Process as claimed in claim 1, characterized in that the monoamines d) are present in an amount of from 0.5 to 5 % by weight.

3. Process as claimed in claim 1 or 2, characterized in that the aliphatic monoamine has 6 to 10 carbon atoms.

4. Process as claimed in one or more of claims 1 to 3, characterized in that the diamine a) is m-xylylenediamine.

5. Process as claimed in one ore more of claims 1 to 4, characterized in that as derivative a) a Mannich base is used consisting of the diamine and aldehydes and phenoles.

6. Process as claimed in one or more of claims 1 to 5, characterized in that the epoxy resins are liquid.

7. Process as claimed in one or more of claims 1 to 6, characterized in that the epoxy resins have a molecular weight of less than 600.


**Revendications** pour les Etats contractants: BE, CH, DE, GB, LI, NL

1. Durcisseur pour des résines époxy à base

a) de diamines araliphatiques ou cycloaliphatiques, liquides à la température ambiante, ayant 4 atomes d'hydrogène dans le groupe amino ou de leurs dérivés liquides agant au moins 3 atomes d'hydrogène dans le groupe amino,

b) éventuellement d'agents modifiants usuels pour les polyamines selon a) et

c) éventuellement d'additifs usuels, caractérisé en ce qu'il contient

d) de 0,1 à 10 % en poids de monoamines aliphatiques primaires, dont les parties alkyle ont de 5 à 18 atomes de carbone,

les pourcentages se rapportant à la somme des composantes a) et d).

2. Procédé pour durcir des résines époxy avec des durcisseurs à base

a) de diamines araliphatiques ou cycloaliphatiques, liquides à la température ambiante, ayant 4 atomes d'hydrogène dans le groupe amino ou de leurs dérivés liquides agant au moins 3 atomes d'hydrogène dans le groupe amino,

b) éventuellement d'agents modifiants usuels pour les polyamines selon a) et

c) éventuellement d'additifs usuels, caractérisé en ce qu'il contient

d) de 0,1 à 10 % en poids de monoamines aliphatiques primaires, dont les parties alkyle ont de 5 à 18 atomes de carbone,

les pourcentages se rapportant à la somme des composantes a) et d).

3. Mode de réalisation selon la revendication 1 ou 2, caractérisé en ce que les monoamines d) sont présentes en une quantité de 0,5 à 5 % en poids.

4. Mode de réalisation selon l'une quelconque des revendications 1 à 3, caractérisé en ce que la monoamine aliphatique a de 6 à 10 atomes de carbone.

5. Mode de réalisation selon l'une quelconque des revendications 1 à 4, caractérisé en ce que la diamine a) est la m-xylylène-diamine.

6. Mode de réalisation selon l'une quelconque des revendications 1 à 5, caractérisé en ce que l'on met en jeu comme dérivé a) une base de Mannich formé à partir de la diamine, des aldéhydes et des phénols.

7. Mode de réalisation selon l'une quelconque des revendications 1 à 6, caractérisé en ce que les résines époxy sont liquides.

8. Mode de réalisation selon l'une quelconque des revendications 1 à 7, caractérisé en ce que les résines époxy ont un poids moléculaire au-dessous de 600.

**Revendications** pour l'Etat contractant: AT

1. Procédé pour durcir des résines époxy avec des durcisseurs à base

a) de diamines araliphatiques ou cycloaliphatiques, liquides à la température ambiante, ayant 4 atomes d'hydrogène dans le groupe amino ou de leurs dérivés liquides ayant au moins 3 atomes d'hydrogène dans le groupe amino,

b) éventuellement d'agents modifiants usuels pour les polyamines selon a) et

c) éventuellement d'additifs usuels, caractérisé en ce qu'il contient

d) de 0,1 à 10 % en poids de monoamines aliphatiques primaires, dont les parties alkyle ont de 5 à 18 atomes de carbone,

les pourcentages se rapportant à la somme des composantes a) et d).

2. Mode de réalisation selon la revendication 1 ou 2, caractérisé en ce que les monoamines d) sont présentes en une quantité de 0,5 à 5 % en poids.

3. Mode de réalisation selon l'une quelconque des revendications 1 à 3, caractérisé en ce que la monoamine aliphatique a de 6 à 10 atomes de carbone.

4. Mode de réalisation selon l'une quelconque des revendications 1 à 4, caractérisé en ce que la diamine a) est la m-xylyléne-diamine.

5. Mode de réalisation selon l'une quelconque des revendications 1 à 5, caractérisé en ce que l'on met en jeu comme dérivé a) une base de Mannich formé à partir de la diamine, des aldéhydes et des phénols.

6. Mode de réalisation selon l'une quelconque des revendications 1 à 6, caractérisé en ce que les résines époxy sont liquides.

7. Mode de réalisation selon l'une quelconque des revendications 1 à 7, caractérisé en ce que les résines époxy ont un poids moléculaire au-dessous de 600.